# EUROPÄISCHE PATENTSCHRIFT

(11) **EP 1 189 948 B1**
(45) Veröffentlichungstag und Bekanntmachung des Hinweises auf die Patenterteilung: **26.02.2003**
(21) Anmeldenummer: 00936816.8
(22) Anmeldetag: 26.05.2000
(51) Int. Cl.: C08F 8/00, C08F 8/04

(54) **VERFAHREN ZUR SELEKTIVEN HYDRIERUNG VON ETHYLENISCH UNGESÄTTIGTEN DOPPELBINDUNGEN IN POLYMEREN**
METHOD OF SELECTIVELY HYDROGENATING ETHYLENICALLY UNSATURATED DOUBLE BONDS IN POLYMERS
PROCEDE D'HYDROGENATION SELECTIVE DE DOUBLES LIAISONS ETHYLENIQUEMENT INSATUREES DANS DES POLYMERES

(30) Priorität: 27.05.1999 DE 19924340
(43) Veröffentlichungstag der Anmeldung: 27.03.2002
(73) Patentinhaber: BASF AKTIENGESELLSCHAFT, 67056 Ludwigshafen (DE)
(72) Erfinder: DERSCH, Rolf, D-67434 Neustadt (DE); MAAS, Heiko, D-67105 Schifferstadt (DE); SCHÄDLER, Volker, D-68163 Mannheim (DE)
(74) Vertreter: Kinzebach, Werner, Dr.
(86) Internationale Anmeldenummer: EP0004832
(87) Internationale Veröffentlichungsnummer: WO00073357

(56) Entgegenhaltungen:
- EP-A- 0 588 098
- WO-A-99/28357
- US-A- 4 673 757

## Beschreibung

Die vorliegende Erfindung betrifft ein Verfahren zur Hydrierung von ethylenisch ungesättigten Doppelbindungen in Polymeren P durch Umsetzung einer wässrigen Dispersion wenigstens eines Polymeren P mit Wasserstoff in Gegenwart wenigstens eines Hydrierkatalysators.

Die Hydrierung ethylenisch ungesättigter Doppelbindungen stellt ein wichtiges Verfahren zur Derivatisierung von Polymeren, die ethylenisch ungesättigte Doppelbindungen enthalten, dar. Eine Reihe derartiger Polymere werden in großtechnischem Maßstab hergestellt. Hier seien beispielhaft Polymere auf der Basis von Butadien und/oder Isopren genannt. Die Hydrierung erlaubt somit die Bereitstellung von Polymerklassen, die neu oder auf anderem Wege nur sehr viel aufwendiger herstellbar sind.

Bei der Entwicklung von Hydrierverfahren für Polymere ist zu beachten, dass die zu hydrierenden Polymere neben den ethylenisch ungesättigten Doppelbindungen auch andere gegenüber der Hydrierung reaktive Funktionalitäten aufweisen können. Das Hydrierverfahren sollte sich daher im Regelfall durch eine hohe Selektivität hinsichtlich der zu hydrierenden Doppelbindungen auszeichnen. Ferner birgt die Hydrierung grundsätzlich die Gefahr, dass auf dem Polymer reaktive Zwischenstufen erzeugt werden, die mit noch nicht abreagierten Doppelbindungen unter Vernetzung reagieren können.

Verfahren zur Hydrierung von Polymeren, die ethylenisch ungesättigte Doppelbindungen aufweisen, sind grundsätzlich bekannt. Eine Übersicht über derartige Verfahren geben N. T. McManus et al. (J. Macromol. Sci., Rev. Macromol. Chem. Phys. (C 35(2), 1995, 239-285). Allen beschriebenen Verfahren ist gemeinsam, dass die Umsetzung in einem organischen Medium durchgeführt wird. Hierzu zählt die homogene Reaktion des gelösten Polymers in Gegenwart eines homogenen gelösten Katalysators in einem organischen Lösungsmittel sowie heterogene Reaktionen von Polymeren, die in einem organischen Lösungsmittel suspendiert sind, in Gegenwart homogen gelöster Katalysatoren, sowie die Hydrierung von Polymerlösungen und/oder Polymerschmelzen in Gegenwart heterogener Katalysatoren. In der Regel wird bei der Hydrierung jedoch Gelbildung beobachtet, was auf Vernetzungsreaktionen hinweist.

Aus der EP-A 588097 ist die Hydrierung von Polymeren auf der Basis von Butadien/Acrylnitril (NBR) bekannt. Bei diesen Verfahren werden die Polymere als wässrige Dispersionen in wenigstens der fünffachen Menge, bezogen auf die Dispersion, eines organischen Lösungsmittels in Gegenwart von Rutheniumkatalysatoren umgesetzt. Durch Zugabe spezieller Additive wird die Bildung von vernetzten Polymeren weitgehend unterdrückt. Nachteilig an diesem Verfahren ist die Verwendung der großen Lösungsmittelmengen.

Grundsätzlich besteht ein großes Interesse an der Übertragung der katalytischen Hydrierung von Polymeren, die ethylenisch ungesättigte Doppelbindungen enthalten, auf wässrige Reaktionssysteme. So sind einige großtechnisch bedeutende Polymere des Butadiens kommerziell als wässrige Polymerdispersionen verfügbar. Ferner stellt die Verwendung von Lösungsmitteln bei der Produktion einen nicht unwesentlichen Kostenfaktor dar. Die Vermeidung von Lösungsmitteln ist auch aus arbeitshygienischen Gründen und Umweltschutzaspekten wünschenswert.

Singha et al. (Rubber Chemistry and Technology, Vol. 68, 1995 S. 281 - 86) beschreiben die Hydrierung einer wässrigen NBR-Dispersion in Gegenwart von wasserlöslichen Katalysatoren vom Wilkinson-Typ. Trotz vergleichsweise hoher Katalysatormengen werden nur geringe Umsätze erzielt.

Die ältere deutsche Patentanmeldung P 197 53 302.7 beschreibt die Hydrierung von Butadien enthaltenden wässrigen Polymerdispersionen in Gegenwart eines Übergangsmetallkatalysators, der Rhodium und oder Ruthenium und wenigstens eine phosphorhaltige Verbindung umfasst. Hierbei stellt man zunächst aus einem Salz oder einer Komplexverbindung des jeweiligen Übergangsmetalls und einer phosphorhaltigen Verbindung in einem organischen Lösungsmittel unter Wasserstoffatmosphäre eine Lösung des Hydrierkatalysators her und gibt diese Lösung anschließend zu der zu hydrierenden, wässrigen Polymerdispersion. Diese Methode führt zu zufriedenstellenden Hydrierungsumsätzen und vermeidet den Einsatz größerer Lösungsmittelmengen. Nachteilig ist jedoch, daß mit dem Katalysator ein organisches Lösungsmittel in die Polymerdispersion eingebracht wird. Zudem bedeutet die gesonderte Herstellung des Katalysators einen zusätzlichen Aufwand.

Der vorliegenden Erfindung liegt die Aufgabe zugrunde, ein Verfahren zur Hydrierung von ethylenisch ungesättigten Doppelbindungen in Polymeren bereitzustellen, das in einer wässrigen Dispersion der Polymere P durchgeführt werden kann und das eine hohe Selektivität zugunsten der Hydrierung der ethylenischen Doppelbindung gegenüber der Hydrierung anderer Funktionalitäten oder gegenüber Vernetzungsreaktionen gewährleistet.

Diese Aufgabe wird überraschenderweise durch ein Verfahren gelöst, bei dem man eine wässrige Dispersion eines Polymeren P mit ethylenisch ungesättigten Doppelbindungen in Gegenwart eines Hydrierkatalysators hydriert, wobei man den Hydrierkatalysator, der wenigstens ein Übergangsmetall, ausgewählt unter Rhodium und/oder Ruthenium, und wenigstens eine nichtionische, phosphorhaltige Verbindung, die eine koordinative Verbindung mit dem Übergangsmetall ausbilden kann, umfasst, ohne Zusatz eines Lösungsmittels in die wässrige Dispersion des Polymeren P einarbeitet.

Die Vorliegende Erfindung betrifft somit ein Verfahren zur Hydrierung von ethylenisch ungesättigten Doppelbindungen in Polymeren P durch Umsetzung einer wässrigen Dispersion wenigstens eines Polymeren P mit Wasserstoff in Gegenwart wenigstens eines Hydrierkatalysators, der wenigstens ein Übergangsmetall, ausgewählt unter Rhodium und/oder Ruthenium, und wenigstens eine nichtionische, phosphorhaltige Verbindung, die eine koordinative Verbindung mit dem Übergangsmetall ausbilden kann, umfasst, dadurch gekennzeichnet, dass man den Hydrierkatalysator ohne Zusatz eines Lösungsmittels in die wässrige Dispersion des Polymeren P einarbeitet.

Im vorliegenden Fall steht "ethylenisch ungesättigte Doppelbindung" für ein- zwei- oder dreifach substituierte C=C-Doppelbindungen, die nicht in ein aromatisches π-Elektronensystem eingebunden sind. Sie sind vorzugsweise nicht mit anderen Doppelbindungen konjugiert.

Erfindungsgemäß wird der Hydrierkatalysator ohne Zusatz eines organischen Lösungsmittels in die Dispersion des zu hydrierenden Polymeren P eingearbeitet. Zu diesem Zweck kann der Hydrierkatalysator als solcher, d.h. in Form einer Komplexverbindung, die das jeweilige Übergangsmetall und wenigstens eine phosphorhaltige Verbindung als Liganden enthält, in die Dispersion eingearbeitet werden. In diesem Fall erfolgt die Einarbeitung in der Regel durch Zugabe der Komplexverbindung aus Übergangsmetall und phosphorhaltiger Verbindung in die wässrige Dispersion des zu hydrierenden Polymeren P. Die Komplexverbindung aus Übergangsmetall und phosphorhaltiger Verbindung kann als Feststoff, als wässrige Lösung oder als Lösung in einer verdünnten wässrigen Mineralsäure, z.B. in verdünnter Salzsäure, zugegeben werden. Man kann das Übergangsmetall und die phosphorhaltige Verbindung auch separat in die Dispersion des zu hydrierenden Polymeren P einarbeiten. Zu diesem Zweck arbeitet man das Übergangsmetall in Form eines Salzes oder einer Komplexverbindung, die keine phosphorhaltige Verbindung umfaßt, in die Dispersion des Polymeren P ein. Die phosphorhaltige Verbindung wird hierbei als separate Verbindung in die Dispersion des Polymeren P eingearbeitet.

Zur Einarbeitung des Übergangsmetalls in die Dispersion des Polymeren P kann man beispielsweise ein Salz oder eine geeignete Komplexverbindung des Übergangsmetalls als Feststoff oder als wässrige Lösung oder als Lösung in einer verdünnten Mineralsäure zu der Dispersion des Polymeren P geben. Die Einarbeitung des Übergangsmetalls kann auch dergestalt erfolgen, daß man vor der Herstellung der Dispersion des Polymeren P ein Salz oder eine Komplexverbindung des Übergangsmetalls in den zu polymerisierenden Monomeren M löst und anschließend das Polymer P durch Polymerisation der Monomere M in Gegenwart des Übergangsmetalls herstellt. Diese Methode bietet sich insbesondere dann an, wenn die Herstellung der wässrigen Dispersion des Polymeren P durch radikalische wässrige Emulsionspolymerisation der das Polymer P bildenden Monomere M erfolgt. Sofern es sich bei der wässrigen Dispersion des Polymeren P um eine Sekundärdispersion handelt, kann man das Übergangsmetall in geeigneter Form in einer Lösung oder Schmelze des Polymeren lösen, die dann in die eigentliche wässrige Dispersion des Polymeren P überführt wird. Die phosphorhaltige Verbindung kann prinzipiell zu jedem der obengenannten Zeitpunkte zugegeben werden. Vorzugsweise gibt man die phosphorhaltige Verbindung zu der wässrigen Dispersion des Polymeren P. Insbesondere gibt man sie erst kurz vor der Hydrierung zu der wässrigen Dispersion des Polymeren P.

Erfindungsgemäß geeignete Salze und Komplexverbindungen des Rhodiums und des Rutheniums, die noch keine phosphorhaltige Verbindung als Liganden enthalten, sind im folgenden beispielhaft aufgeführt: zu den Salzen des Rutheniums und des Rhodiums zählen deren Hydride, Oxyde, Sulfide, Nitrate, Sulfate, Halogenide, z. B. deren Chloride, Carboxylate, z. B. deren Acetate, Propionate, Hexanoate oder Benzoate, deren Salze mit Sulfonsäuren sowie gemischte Salze, d. h. Salze mit verschiedenen Anionen, z. B. die Oxidchloride. Weiterhin eignen sich Salze von komplexen Ionen des Rhodiums und/oder Rutheniums, beispielsweise die Salze der Rhodium- bzw. der Rutheniumsauerstoffsäuren, die Salze von Halogenoruthenaten und Halogenorhodaten, insbesondere die Chlororuthenate und Chlororhodate, die Ammin- und Aquokomplexe der Rhodiumhalogenide und der Rutheniumhalogenide, insbesondere der Chloride, sowie die Salze von Nitroruthenaten. Beispiele für die vorgenannten Salze und komplexen Salze sind: Ruthenium(III)chlorid, Ruthenium(III)nitrosylchlorid,Ammoniumpentachloroaquoruthenat(III), Hexamminruthenium(II)- und -ruthenium(III)chlorid, Dichlorobis(2,2'-dipyridyl)ruthenium(II), Tris(2,2'-dipyridyl)ruthenium(II)chlorid, Pentamminchlororuthenium(III)chlorid, Kaliumpentachloronitrosylruthenium(II), Ruthenium(IV)oxid, Tetraacetatochlorodiruthenium(II,III), Hexakisacetatotriaquo-µ-oxotriruthenium(III)acetat, Rhodium(III)chlorid, Rhodium(III)hydroxyd, Rhodium(III)nitrat, Rhodium(III)sulfat, Ammoniumpentachloroaquorhodat(III), Kaliumpentachlororhodat(III), Natriumhexachlororhodat(III), Triammintrichlororhodium(III), Trisethylendiaminrhodium(III)chlorid, Rhodium(II)acetat-Dimer, Hexakisacetatotriaquo-µ-oxotrisrhodium(III), Rhodium(IV)oxid und Kaliumhexanitrorhodat(III). Ebenfalls geeignet sind neutrale Komplexe des Rhodiums und des Rutheniums. Hierbei sei angemerkt, dass die Übergänge zwischen Salzen des Rutheniums bzw. Rhodiums sowie salzartigen und neutralen Komplexen fließend sind und die vorliegende Einteilung nur ordnenden Charakter hat. Beispiele für neutrale Komplexe, die keine phosphorhaltige Verbindung enthalten, sind die 2,4-Pentandionate des Rhodiums und des Rutheniums wie Ruthenium(III)tris-2,4-pentandionat, Rhodium(I)dicarbonyl-2,4-pentandionat, Rhodium(III)tris-2,4-pentandionat, Bisethylenrhodium(I)-2,4-pentandionat und Norbornadienrhodium(I)-2,4-pentandionat, die Carbonylkomplexe des Rutheniums und des Rhodiums wie Dodecacarbonyltetrarhodium, Hexadecacarbonylrhodium, Tetracarbonyldi-µ-chlorodirhodium(I) und Dodecacarbonyltriruthenium.

Erfindungsgemäß geeignet sind organische, phosphorhaltige Verbindungen, worin die Phosphoratome dreiwertig sind. Sie enthalten vorzugsweise ein oder zwei Phosphoratome.

Beispiele für bevorzugte phosphorhaltige Verbindungen sind die Verbindungen der allgemeinen Formel I

PR₃ (I)

und die Verbindungen der Formel II

R₂P-(O)ₓ-A-(O)_{y}-PR₂ (II)

worin
- R: gleich oder verschieden sein können und unabhängig voneinander für C₁-C₁₀-Alkyl, C₄-C₁₂-Cycloalkyl, Aryl, C₁-C₁₀-Alkyloxy, C₄-C₁₂-Cycloalkyloxy und Aryloxy oder Fluor stehen, oder zwei Reste R gemeinsam C₃-C₆-Alkylen, C₃-C₆-Alkenylen oder C₃-C₆-Alkadienylen bedeuten,
- A: einen bivalenten Kohlenwasserstoffrest bedeutet, und
- x,y: unabhängig voneinander für 0 oder 1, und vorzugsweise für 0 stehen.

In diesem Zusammenhang steht C₁-C₁₀-Alkyl sowohl für lineares, als auch verzweigtes Alkyl, das 1 bis 10, vorzugsweise 1 bis 6 und insbesondere 1 bis 4 Kohlenstoffatome aufweist, z. B. Methyl, Ethyl, n-Propyl, Isopropyl, n-Butyl, 2-Butyl, Isobutyl, tert.-Butyl, n-Hexyl, 2-Ethylhexyl und n-Decyl. C₁-C₁₀-Alkyloxy steht für eine lineare oder verzweigte, primäre, sekundäre oder tertiäre Alkoxygruppe mit 1 bis 10, vorzugsweise 1 bis 6 und insbesondere 1 bis 4 Kohlenstoffatomen z. B. Methoxy, Ethoxy, n-Propoxy, Isopropoxy, n-Butoxy, 2-Butyloxy, tert.-Butoxy, n-Hexyloxy, 2-Ethylhexyloxy. Die Alkylgruppen in C₁-C₁₀-Alkyl und C₁-C₁₀-Alkoxy können teilweise oder vollständig halogeniert sein und/oder eine, zwei oder drei funktionelle Gruppen, ausgewählt unter Hydroxy- oder Aminofunktionen aufweisen oder durch ein oder mehrere, nicht benachbarte Sauerstoffatome oder Iminogruppen unterbrochen sein können. Beispiele für derartige Reste sind 2-Hydroxyethyl, Hydroxypropyl, 2-Aminoethyl, 5-Bydroxy-3-oxopentyl. Teilweise halogeniert bedeutet hier und im folgenden, daß die jeweilige Gruppe eines, zwei, drei, vier oder fünf Balogenatome, vorzugsweise Chlor oder Fluor aufweist.

C₄-C₁₂-Cycloalkyl steht für gesättigte Mono-, Bi- und Tricyclen wie Cyclobutyl, Cyclopentyl, Cycloheptyl, Cyclooctyl, Norbornyl, Camphyl oder Tricyclodecanyl, die bis zu 12 Kohlenstoffatome aufweisen können und die teilweise oder vollständig halogeniert sein und/oder einen, zwei oder drei Substituenten oder funktionelle Gruppen, ausgewählt unter C₁-C₄-Alkyl, C₁-C₄-Alkoxy, Hydroxy- oder Aminofunktionen, aufweisen können. Sie können außerdem im Cyclus ein oder mehrere, nicht benachbarte Sauerstoffatome oder Iminogruppen aufweisen.

Sofern zwei Reste R gemeinsam für C₃-C₆-Alkylen, C₃-C₆-Alkenylen oder C₃-C₆-Alkadienylen stehen, bedeuten sie eine lineare Kohlenstoffkette mit 3, 4, 5 oder 6 Kohlenstoffatomen in der Kette, wobei diese durch ein oder zwei Sauerstoffatome unterbrochen sein kann. Somit bilden sie gemeinsam mit dem Phosphoratom an das sie gebunden sind, einen Phosphorheterocyclus, der neben dem Phosphoratom auch ein oder zwei Sauerstoffatome aufweisen kann und wenigstens 4 und bis zu 9 Ringatome aufweist. C₃-C₆-Alkylen, C₃-C₆-Alkenylen oder C₃-C₆-Alkadienylen können sowohl einen, zwei oder drei Substituenten oder funktionelle Gruppen, ausgewählt unter C₁-C₄-Alkyl, C₁-C₄-Alkoxy, Hydroxy- oder Aminofunktionen, aufweisen. Sie können auch mit einem oder zwei Phenylgruppen ein kondensierten Polycyclus bilden. Beispielsweise können zwei Reste R einen Tetrahydrophosphol-1-yl-, Benzodihydrophosphol-1-yl-, Dibenzophosphol-1-yl- oder einen Phenoxaphosphan-10-yl-Rest bilden.

Aryl steht für Phenyl, Naphthyl oder Anthracenyl, die teilweise oder vollständig halogeniert sein können und/oder einen oder mehrere Substituenten, ausgewählt unter C₁-C₄-Alkyl, C₁-C₄-Alkyloxy, Amino, Di-C₁-C₄-alkylamino und Hydroxy, das gegebenenfalls auch ethoxyliert sein kann, aufweisen können. Bevorzugtes Aryl ist Phenyl, o-, m- oder p-Tolyl, p-Chlorphenyl, p-tert.-Butylphenyl und p-Hydroxyphenyl, das auch ethoxyliert sein kann (EO-Grad 1 bis 50).

A steht für einen gesättigten oder ungesättigten, monocyclischen, polycyclischen oder acyclischen, zweiwertigen Kohlenwasserstoffrest mit vorzugsweise bis zu 25 Kohlenstoffatomen.

A steht beispielsweise für lineares oder verzweigtes C₂-C₁₂-, vorzugsweise C₂-C₆-Alkylen wie 1,2-Ethylen, 1,2- bzw. 1,3-Propylen, 2,3-Butylen, 2,2-Dimethyl-1,3-propylen, Butan-1,4-diyl, das gegebenenfalls substituiert und/oder Teil eines Carbocyclus oder eines Heterocyclus ist, z.B. wie in 2,3-(1',3'-Dioxa-2',2'-dimethylpropan-1',3'-diyl)butan-1,4-diyl und trans- oder cis-Norbornan-1,2-diyl. A steht weiterhin auch für zweiwertige mono-, bioder tricyclische Reste mit Phenyl-, Naphthyl- oder Anthracenylgruppen und umfasst insbesondere o-Phenylen, o,o-Diphenylen, (o,o-Diphenylen)methan, 2,2-(o,o-Diphenylen)propan, (o,o-Diphenylen)ether, 1,8-Naphthylen, 2,2'-Binaphthylen, 1,1'-Ferrocenylen, 1,9-Anthracenylen, 1,9-Xanthenylen, wobei die Phenylen-, Naphthylen- oder Anthracenylengruppen teilweise oder vollständig halogeniert sein können und/oder einen oder mehrere Substituenten, ausgewählt unter C₁-C₄-Alkyl, C₁-C₄-Alkyloxy, Amino, Di-C₁-C₄-alkylamino und Hydroxy, das gegebenenfalls auch ethoxyliert sein kann, aufweisen können.

Bevorzugte Reste R sind Methyl, Ethyl, n-Propyl, Isopropyl, n-Butyl, 2-Butyl, Isobutyl, tert.-Butyl, n-Hexyl, Cyclohexyl, Cyclopentyl, Phenyl, o-, m- oder p-Tolyl, p-Chlorphenyl, p-tert.-Butylphenyl und p-Hydroxyphenyl, insbesondere n-Butyl, 2-Butyl, Isobutyl, tert.-Butyl, Cyclohexyl und Phenyl.

Beispiele für bevorzugte Verbindungen der Formel I sind Triphenylphosphin, Triisopropylphosphin, Tri-n-butylphosphin, Tri-n-octylphosphin, Tricyclopentylphosphin, Tricyclohexylphosphin, Trisanisylphosphin, Tris(p-tolyl)phosphin, Triethylphosphit, Tri-n-butylphosphit und Dibenzophosphol. Beispiele für bevorzugte Verbindungen der Formel II sind 1,2-Bis(diphenylphosphino)ethan, 1,3-Bis(diphenylphosphino)propan, 1,1'-Bis(diphenylphosphino)ferrocen, 2,2'-Bis(diphenylphosphino)-1,1'-biphenyl und 2,2'-Bis(diphenylphosphino)-1,1'-binaphthyl. Weitere Beispiele für Verbindungen der allgemeinen Formel II finden sich in WO 97/33854, Angew. Chem. 1999, 111 S. 349; Applied Homogeneous Catalysis with Organometallic Compounds, Vol. 1 (Hrsg., B. Cornils, W.A. Herrmann) VCH Weinheim, New-York 1996.

Die erfindungsgemäßen phosphorhaltigen Verbindungen können auch dahingehend modifiziert sein, daß sie noch weitere zur Koordination mit dem Metallatom geeignete Atome oder Atomgruppen, wie Amino- oder Iminogruppen, z. B. Oxazolin und Imidazolin-Gruppen, aufweisen. Die Wirkungsweise derartiger phosphorhaltiger Verbindungen ist vermutlich so zu erklären, dass sie die Bildung hydrieraktiver Spezies aus dem jeweils eingesetzten Ruthenium- oder Rhodiumprecursor unterstützen. Bevorzugte phosphorhaltige Verbindungen sind die oben genannten Verbindungen der allgemeinen Formel I und II.

Erfindungsgemäße Komplexe des Rutheniums mit wenigstens einer phosphorhaltigen Verbindung gehorchen vorzugsweise der allgemeinen Formel III:

Ru X¹X² (CO)ₖ (L¹)₁ (L²)₂ (III)

worin
- X¹ und X²: unabhängig voneinander für Wasserstoff, Halogen, vorzugsweise Chlorid, das Anion einer Carbonsäure, z. B. Acetat, Benzoat oder Hexanoat oder einer Sulfonsäure, z. B. Phenylsulfonat, Acetylacetonat, Phenyl, das gegebenenfalls substituiert ist, stehen,
- k und l: unabhängig voneinander für 0, 1 oder 2 stehen, mit der Maßgabe, dass k + 1 = 1 oder 2 ist,
- L¹: ausgewählt ist unter Carbonyl, Pyridin, Benzonitril, Dibenzophosphol, Cycloolefinen und einem Liganden der allgemeinen Formel PR₃, worin R die zuvor genannten Bedeutungen hat, und
- L²: für einen phosphorhaltige Liganden der Formel I steht und (L²)₂ auch für einen phosphorhaltige Liganden der Formel II stehen kann.

Erfindungsgemäße Komplexe des Rhodiums mit wenigstens einer phosphorhaltigen Verbindung gehorchen vorzugsweise der allgemeinen Formel IV:

Rh Xₘ L³ L⁴ (L⁵)ₙ (IV)

worin
- X: für Halogenid, vorzugsweise Chlorid oder Bromid, das Anion einer Carbonsäure, Acetylacetonat, Aryl- oder Alkylsulfonat, Hydrid oder das Diphenyltriazinanion steht,
- L³, L⁴ und L⁵: unabhängig voneinander für CO, Olefine, Cycloolefine, Benzonitril, einen phosphorhaltigen Liganden der Formel I oder II,
- m: für 1 oder 2 und n für 0, 1 oder 2 stehen,
mit der Maßgabe, dass wenigstens einer der Liganden L³, L⁴ und L⁵ für eine der oben genannten phosphorhaltigen Liganden der allgemeinen Formel I oder II steht.

X steht in Formel III oder IV vorzugsweise für Hydrid, Chlorid, Bromid, Acetat, Tosylat, Acetylacetonat oder das Diphenyltriacinanion, insbesondere für Hydrid, Chlorid oder Acetat.

Beispiele für geeignete Phosphinkomplexe der allgemeinen Formeln III und IV sind: Carbonylchlorohydridobis(tricyclohexylphosphin)ruthenium(II), Carbonylchlorohydridobis(triisopropylphosphin)ruthenium(II), Carbonylchlorohydridobis(triphenylphosphin)ruthenium(II), Carbonylchlorostyrylbis(tricyclohexylphosphin)ruthenium(II),Carbonylchlorostyrylbis(triisopropylphosphin)ruthenium(II), Carbonylchlorobenzoatobis(triphenylphosphin)ruthenium(II), Dichlorotris(triphenylphosphin)ruthenium(II), Bis(triphenylphosphin)rutheniumdicarbonylchlorid, Acetatohydridotris(triphenylphosphin)ruthenium(II), Chlorotris(triphenylphosphin)rhodium(I), Hydridotetrakis(triphenylphosphin)rhodium(I), Hydridotris(dibenzophosphol)rhodium(I).

Bevorzugtes Übergangsmetall im erfindungsgemäßen Verfahren ist Ruthenium. Ruthenium wird vorzugsweise als eine der oben genannten Rutheniumverbindungen mit 2,4-Pentandionat-Liganden eingesetzt. Insbesondere setzt man Ruthenium-tris-2,4-pentandionat ein. Ruthenium wird bevorzugt mit Verbindungen der Formel I eingesetzt, insbesondere mit Triisopropylphosphin, Tri-n-butylphosphin, Tris-n-octylphosphin, Tricyclohexylphosphin, Triphenylphosphin, Trisanisylphosphin und Tris(p-tolyl)phosphin.

Je nach Art des Katalysatorsystems und dem gewünschten Umsatz werden Katalysatormengen im Bereich von 1 bis 1000 ppm, vorzugsweise 5 bis 500 ppm Ruthenium und/oder Rhodium, bezogen auf das Gesamtgewicht des zu hydrierenden Polymers P eingesetzt. Das molare Verhältnis von phosphorhaltiger Verbindung zu Metallatom liegt in der Regel im Bereich von 1:10 bis 100:1, vorzugsweise 1:2 bis 50:1 und speziell 1:1 bis 20:1.

Die Durchführung der erfindungsgemäßen Hydrierung erfolgt in der Regel so, dass man zunächst den Hydrierkatalysator in der oben beschriebenen Weise in die wässrige Dispersion des Polymeren P einarbeitet. Gegebenenfalls stellt man die Dispersion durch Verdünnen mit Wasser oder einer Wasser-Emulgator-Mischung vor oder nach der Einarbeitung des Katalysators auf einen geeigneten Feststoffgehalt ein. Der Feststoffgehalt der zu hydrierenden Dispersion des Polymeren P liegt in der Regel im Bereich von 20 bis 60 Gew.-% und vorzugsweise im Bereich von 20 bis 50 Gew.-%.

Dann überführt man gegebenenfalls die katalysatorhaltige Dispersion in ein für die Hydrierung geeignetes Reaktionsgefäß, entfernt gegebenenfalls Sauerstoff, beispielsweise durch Spülen des Reaktionsgefäßes mit einem Inertgas wie Stickstoff, stellt den gewünschten Wasserstoffdruck ein und erhitzt auf eine geeignete Reaktionstemperatur. Hierbei kann man z. B. so vorgehen, dass man zuerst nach zugabe des Katalysators zu der Dispersion einen geringeren Wasserstoffüberdruck einstellt, dann den Reaktionsansatz auf die gewünschte Reaktionstemperatur erhitzt und dann den für die Reaktion erforderlichen Wasserstoffüberdruck einstellt.

Die Hydrierung erfolgt in der Regel bei einem Partialdruck des Wasserstoffs im Bereich von 0,5 bis 600 bar, vorzugsweise 50 bis 400 bar, insbesondere 100 bis 300 bar. Die Reaktionstemperatur liegt in der Regel im Bereich von 20 bis 250 °C, vorzugsweise 50 bis 200 °C, insbesondere 100 bis 180 °C. Die Reaktionsdauer liegt in der Regel im Bereich von 1 bis 50 Stunden, vorzugsweise 2 bis 40 Stunden und insbesondere 3 bis 30 Stunden.

Die Reaktion kann je nach gewünschter Eigenschaft des hydrierten Polymers bis zu einem bestimmten Umsatz geführt werden, der in bekannter Weise durch Reaktionsparameter wie Wasserstoffdruck und Temperatur sowie die Menge des eingesetzten Katalysatorsystems gesteuert wird. Vorzugswiese führt man die Reaktion bis zu einem Umsatz von wenigstens 50%, bezogen auf die in P enthaltenen ethylenischen Doppelbindungen. Die Wahl der jeweiligen Reaktionsparameter kann der Fachmann in Routinexperimenten ermitteln. Eine Umsatzbestimmung kann beispielsweise IR-spektrometrisch durch Kontrolle der für ethylenisch ungesättigten Doppelbindungen typischen Banden im Bereich von 900 bis 1000 cm⁻¹ erfolgen.

Das erfindungsgemäße Verfahren zeichnet sich dadurch aus, dass die ethylenischen Doppelbindungen der Polymerise P auch in Gegenwart anderer hydrieraktiver Doppelbindungen, beispielsweise aromatische C=C-Doppelbindungen, Carbonylgruppen, Nitrilfunktionen etc., selektiv hydriert werden, ohne daß eine merkliche Hydrierung annderer Doppelbindungen beobachtet wird. Ferner ist das erfindungsgemäße Verfahren in seiner Druchführung vereinfacht, da der Katalysator nicht separat hergestellt werden muß. Außerdem werden keine Lösungsmittel benötigt.

Als Substrate für das erfindungsgemäße Hydrierverfahren kommen prinzipiell alle wässrigen Dispersionen von Polymeren mit ethylenisch ungesättigten Doppelbindungen in Betracht. Hierzu zählen sowohl Dispersionen, die durch radikalische Polymerisation von wässrigen Monomeremulsionen hergestellt werden (Primärdispersionen), als auch solche, deren Polymere auf anderem Wege hergestellt werden und anschließend in eine wässrige Dispersion überführt werden (Sekundärdispersionen). Der Begriff Polymerdispersion umfasst grundsätzlich auch Dispersionen von Mikrokapseln.

Der Lösungsmittelgehalt (organische Lösungsmittel) der zu hydrierenden Polymerisatdispersion wird in der Regel 1000 ppm, und insbesondere 500 ppm, bezogen auf das Gesamtgewicht der Dispersion nicht überschreiten.

Bevorzugte Polymere P sind Homo- oder Copolymere konjugierter Diene, die in der Regel 10 bis 100 Gew.-%, vorzugsweise 20 bis 100 Gew.-% wenigstens eines konjugierten Diens in einpolymerisierter Form enthalten (Monomere a). Geeignete Monomere a sind beispielsweise Butadien, Isopren, Chloropren, 1-Methylbutadien, 2,3-Dimethylbutadien, 2-(Tri-C₁-C₄-alkyl)silylbutadien, wie 2-Triethylsilyl-1,3-butadien. Bevorzugte Monomere a sind Butadien und Isopren, insbesondere Butadien.

Eine bevorzugte Ausführungsform der vorliegenden Erfindung betrifft die Hydrierung von Polymeren P, die aus wenigstens einem konjugierten Dien als Monomer a, wenigstens einem weiteren, mit dem Dien copolymerisierbaren, monoethylenisch ungesättigten Monomer b, und gegebenenfalls einem weiteren, modifizierenden Monomer c aufgebaut sind. Derartige Copolymere sind in der Regel aus 10 bis 99 Gew.-%, insbesondere 15 bis 95 Gew.-% Gew.-% und speziell 20 bis 90 Gew.-% Monomeren a und 1 bis 90 Gew.-%, vorzugsweise 5 bis 85 Gew.-% und speziell 10 bis 80 Gew.-% Monomeren b aufgebaut. Die modifizierenden Monomere c machen in der Regel bis zu 20 Gew.-%, bezogen auf das Gesamtgewicht der das Polymer konstituierenden Monomere a, b und c, aus.

Geeignete Monomere b sind die für die Herstellung wässriger Polymerdispersionen üblicherweise verwendeten Monomere, die in der Regel eine Wasserlöslichkeit unterhalb 80 g/l aufweisen. Hierzu zählen beispielsweise:
- Olefine wie Ethylen, Propen, n-Buten, und Isobuten;
- Vinylaromatische Monomere wie Styrol, α-Methylstyrol, o-Chlorstyrol oder Vinyltoluole;
- Vinyl- und Allylester aliphatischer, linearer oder verzweigter C₁-C₁₈-Monocarbonsäuren wie Vinylacetat, Vinylpropionat, Vinylbutyrat, Vinylvalerat, Vinylhexanoat, Vinyl-2-ethylhexanoat, Vinyldecanoat, Vinyllaurat und Vinylstearat;
- Ester aus vorzugsweise 3 bis 6 C-Atome aufweisenden ethylenisch ungesättigten Mono- und Dicarbonsäuren, beispielsweise Ester der Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atomen aufweisenden Alkanolen wie Methanol, Ethanol, n-Propanol, Isopropanol, 1-Butanol, 2-Butanol, Isobutanol, tert.-Butanol, n-Hexanol, 2-Ethylhexanol, oder C₅-C₁₀-Cycloalkanolen wie Cyclopentanol oder Cyclohexanol und hierunter besonders bevorzugt die Ester der Acrylsäure und/oder der Methacrylsäure, z. B. Methylmethacrylat, n-Butylmethacrylat, tert.-Butylmethacrylat, Methylacrylat, Ethylacrylat, n-Butylacrylat, tert.-Butylacrylat, 2-Ethylhexylacrylat und Laurylacrylat.

Weiterhin kommen als Monomere b ethylenisch ungesättigte Nitrile wie Acrylnitril oder Methacrylnitril in Betracht.

Zu den modifizierenden Monomeren c zählen Monomere c', die eine erhöhte Wasserlöslichkeit (z. B. ≥ 80 g/l bei 25 °C und 1 bar) aufweisen. Die Monomere c' umfassen z. B. die vorgenannten ethylenisch ungesättigten Carbonsäuren, insbesondere Acrylsäure, Methacrylsäure, Maleinsäure, Itaconsäure, die Amide der vorgenannten ethylenisch ungesättigten Carbonsäuren, z. B. Acrylamid und Methacrylamid, die N-Alkylolamide der vorgenannten ethylenisch ungesättigten Carbonsäuren wie N-Methylolacrylamid und N-Methylolmethacrylamid, die Hydroxyalkylester der vorgenannten ethylenisch ungesättigten Carbonsäuren, z. B. 2-Hydroxyethylacrylat und - methacrylat, ethylenisch ungesättigte Sulfonsäuren bzw. deren Alkalimetallsalze, z. B. Vinylsulfonsäure, Allylsulfonsäure, Methallylsulfonsäure, Acrylamido-2-methylpropansulfonsäure, ferner N-Vinyllactame, z. B. N-Vinylpyrrolidon oder N-Vinylcaprolactam. Derartige Monomere c' werden in der Regel in untergeordnetem Maße, d. h ≤ 20 Gew.-%, bezogen auf die Gesamtmenge der zu polymerisierenden Monomere a, b und c, vorzugsweise ≤ 10 Gew.-%, beispielsweise in Mengen von bis zu 0,1 bis 10 Gew.-% und speziell 0,5 bis 8 Gew.-%, eingesetzt.

Weiterhin können die zu hydrierenden Polymere P als Monomere c auch Monomere c" einpolymerisiert enthalten, die wenigstens zwei nicht-konjugierte, ethylenisch ungesättigte Bindungen aufweisen, beispielsweise die Diester zweiwertiger Alkohole mit ethylenisch ungesättigten Monocarbonsäuren. Beispiele hierfür sind Alkylenglykoldiacrylate und Dimethacrylate wie Ethylengkoldi(meth)-acrylat, 1,3-Butylenglykoldi(meth)acrylat, 1,4-Butylenglykoldi(meth)acrylat, Propylenglykoldi(meth)acrylat, weiterhin Divinylbenzol, Vinylmethacrylat, Vinylacrylat, Allylmethacrylat, Allylacrylat, Diallylmaleat, Diallylfumarat, Diallylphthalat, Methylenbisacrylamid, Cyclopentadienylacrylat und -methacrylat, Tricyclodecenylacrylat und -methacrylat, N,N'-Divinylimidazolin-2-on oder Triallylcyanurat. Derartige Monomere werden, sofern erwünscht in Mengen von 0,01 bis 10 Gew.-%, bezogen auf die Gesamtmenge der Monomere a + b + c eingesetzt.

Ferner kann das Polymer P auch als Monomere c auch bifunktionelle Monomere einpolymerisiert enthalten, die neben einer ethylenisch ungesättigten Doppelbindung wenigstens eine reaktive funktionelle Gruppe, beispielsweise eine Epoxid-, Anhydrid, Aldehyd- oder Ketocarbonylfunktion aufweisen. Beispiele für bifunktionelle Monomere sind ethylenisch ungesättigte Glycidylether und -ester, z.B. Vinyl-, Allyl- und Methallylglycidylether, Glycidylacrylat und -methacrylat, die Anhydride α,β-monoethylenisch ungesättigter Mono- und Dicarbonsäuren, z.B. Acrylsäureanhydrid und Methacrylsäureanhydrid, die Diacetonylamide der obengenannten ethylenisch ungesättigten Carbonsäuren, z.B. Diaceton(meth)acrylamid, und die Ester der Acetylessigsäure mit den obengenannten Hydroxyalkylestern ethylenisch ungesättigter Carbonsäuren, z. B. Acetylacetoxyethyl(meth)acrylat. Die zu hydrierenden Polymere P können bifunktionelle Monomere in Mengen bis zu 20 Gew.-%, beispielsweise 0,01 bis 10 Gew.-% enthalten. Die funktionellen Gruppen der bifunktionellen Monomere werden durch die Hydrierung nicht zerstört und ermöglichen die Nachvernetzung der erfindungsgemäßen Polymere P, beispielsweise mit polyfunktionellen Aminen, Hydraziden oder Alkoholen.

Bevorzugte Ausführungsformen des erfindungsgemäßen Verfahrens betreffen die Hydrierung von Polymerdispersionen, deren Polymere P im Wesentlichen aus Butadien und/oder Isopren, insbesondere Butadien als alleinigem Monomer a, und aus Styrol, Acrylnitril, Methacrylnitril, Isobuten und/oder (Meth)acrylsäurealkylestern als Monomeren b aufgebaut sind. Bevorzugte Monomere c sind Acrylsäure, Methacrylsäure, Itaconsäure, Acrylamid, Methacrylamid, N-Methylolacrylamid und/oder N-Methylolmethacrylamid.

Bevorzugte Monomerkombinationen a/b sind Butadien und/oder Isopren mit Styrol und/oder α-Methylstyrol; Butadien mit Acrylnitril und/oder Methacrylnitril; Butadien und Isopren mit Acrylnitril und/oder Methacrylnitril; Butadien mit Acrylnitril und Styrol; Butadien mit Isobuten; Butadien mit (Meth)acrylsäurealkylestern.

Das erfindungsgemäße Verfahren zeichnet sich zum einen dadurch aus, dass die ethylenischen Doppelbindungen der Polymere P selektiv hydriert werden, ohne dass andere hydrieraktive Doppelbindungen, beispielsweise aromatische C=C-Doppelbindungen, Carbonylgruppen, Nitrilfunktionen, Epoxidgruppen angegriffen werden. Auch eine Vernetzung der Polymere tritt nicht, oder nur in untergeordnetem Maße auf. Zum anderen entfällt in der Regel die Herstellung des Hydrierkatalysators vor der Hydrierung. Überdies wird durch das erfindungsgemäße Verfahren ein unnötiger Lösungsmitteleinsatz vermieden.

Die Herstellung zur Hydrierung geeigneter, wässriger Dispersionen der Polymere P ist dem Fachmann bekannt und kann grundsätzlich durch anionische, radikalische oder Ziegler-Natta-Polymerisation in Lösung, in Substanz, in Suspension oder in Emulsion durchgeführt werden. Je nach Reaktionstyp liegen die konjugierten Diene 1,4-polymerisiert und/oder 1,2-polymerisiert vor. Sofern die nach den vorgenannten Verfahren erhältlichen Polymere P nicht bereits als wässrige Dispersionen erhalten werden (Primärdispersionen) werden sie vor der Hydrierung in bekannter Weise in eine wässrige Dispersion überführt (sog. Sekundärdispersionen).

Für das erfindungsgemäße Hydrierverfahren werden vorzugsweise Polymere eingesetzt, die durch radikalische, wässrige Emulsionspolymerisation der vorgenannten Monomere a und gegebenenfalls b und/oder c (einschließlich Mini- und Mikroemulsionspolymerisation) hergestellt wurden. Diese Verfahren sind dem Fachmann hinreichend bekannt und in der Literatur ausführlich beschrieben, beispielsweise in Ullmanns Encyclopedia of Industrial Chemistry, 5th ed., Vol. A21., S. 373-393. In der Regel werden solche Polymere in Gegenwart von Radikalinitiatoren und gegebenenfalls oberflächenaktiven Substanzen wie Emulgatoren und Schutzkolloiden (s. beispielsweise Houben-Weyl, Methoden der organischen Chemie, Bd. XIV/1, Makromolekulare Stoffe, Georg Thieme-Verlag, Stuttgart 1961, S. 192-208) durchgeführt.

Geeignete radikalische Polymerisationsinitiatoren umfassen organische Peroxide wie tert.-Butylhydroperoxid, Benzoylhydroperoxid, Diisopropylbenzoylperoxid, anorganische Peroxide, wie Wasserstoffperoxid, Salze der Peroxomono- und/oder Peroxodischwefelsäure, insbesondere die Ammonium- und/oder Alkalimetallperoxidisulfate (Persulfate), sowie Azoverbindungen, wobei die Persulfate besonders bevorzugt sind. Bevorzugt sind auch kombinierte Systeme, die aus wenigstens einem organischen Reduktionsmittel und wenigstens einem Peroxid und/oder Hydroperoxid zusammengesetzt sind, z. B. tert.-Butylhydroperoxid und das Natriumsalz der Hydroxymethansulfinsäure oder Wasserstoffperoxid und Ascorbinsäure (als elektrolytfreies Redoxinitiatorsystem), und die darüber hinaus auch eine geringe Menge einer im Polymerisationsmedium löslichen Metallverbindung enthalten können, deren metallische Komponente in mehreren wertigkeitsstufen auftreten kann, z.B. Eisen(II)sulfat und wasserlösliche Fe/V-Salze. Die genannten Polymerisationsinitiatoren werden in üblichen Mengen eingesetzt, z. B. in Mengen von 0,01 bis 5, vorzugsweise 0,1 bis 2,0 Gew.-%, bezogen auf die zu polymerisierenden Monomere.

Gegebenenfalls kann die Monomermischung in Gegenwart von üblichen Polymerisationsreglern, wie Mercaptanen, z. B. tert.-Dodecylmercaptan, polymerisiert werden. Diese werden dann in einer Menge von 0,01 bis 5 Gew.-%, bezogen auf die Gesamtmenge der Mischung, verwendet.

Hinsichtlich der verwendbaren Emulgatoren bestehen keine besonderen Einschränkungen. Geeignet sind neutrale Emulgatoren wie ethoxylierte Mono-, Di- und Tri-Alkylphenole (EO-Grad: 3 bis 50, Alkylrest: C₄ bis C₉) oder ethoxylierte Fettalkohole (EO-Grad: 3 bis 50, Alkylrest C₈ bis C₃₆) und anionische Emulgatoren wie die Alkali- und Ammoniumsalze von Fettsäuren (Alkylrest: C₁₂ bis C₂₄), Alkylsulfaten (Alkylrest: C₈ bis C₂₂), von Schwefelsäurehalbestern ethoxylierter Alkanole (EO-Grad: 4 bis 30, Alkylrest: C₈ bis C₂₂) und ethoxylierter Alkylphenole (EO-Grad: 3 bis 50, Alkylrest: C₄ bis C₁₀), von Alkylsulfonsäuren (Alkylrest: C₈ bis C₂₂) und von Alkylarylsulfonsäuren (Alkylrest: C₄ bis C₁₈). Als anionische Emulgatoren kommen weiterhin Alkali- oder Ammoniumsalze von Mono- oder Di-C₄-C₂₄-alkylderivaten des Bis(phenylsulfonsäure)ethers in Frage, z. B. technische Gemische, die 50 bis 80 % des monoalkylierten Produkts enthalten. Derartige Emulgatoren sind aus der US-A 4 269 749 bekannt, die technischen Gemische sind beispielsweise unter der Bezeichnung Dowfax®2A1 (Dow Chemical) im Handel erhältlich.

Besonders bevorzugt sind die Alkalimetall- und/oder Ammoniumsalze, insbesondere die Natriumsalze von. Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Anstelle von oder im Gemisch mit Emulgatoren können aber auch konventionelle Schutzkolloide wie Polyvinylalkohol, Polyvinylpyrrolidon oder amphiphile Blockpolymere mit kurzen hydrophoben Blöcken zur Co-Stabilisierung eingesetzt werden. In der Regel wird die verwendete Menge an Emulgatoren, bezogen auf die zu polymerisierenden Monomeren, 5 Gew.-% nicht überschreiten.

Vorzugsweise wird die Polymerisationsreaktion in Gegenwart einer wässrigen Polymerisatdispersion als Polymersaat (Saat-Latex) durchgeführt. Derartige Verfahren sind dem Fachmann grundsätzlich bekannt und beispielsweise in der DE-A 42 13 967, DE-A 42 13 968, EP-A 567 811, EP-A 567 812 oder EP-A 567 819 beschrieben, auf die hiermit in vollem Umfang Bezug genommen wird.

Die Polymerisationsreaktion wird vorzugsweise unter Druck durchgeführt. Die Polymerisationsdauer kann in einem weiten Bereich variieren. Sie liegt im allgemeinen im Bereich von 1 bis 15 Stunden, vorzugsweise im Bereich von 3 bis 10 Stunden. Auch die Polymerisationstemperatur ist in einem weiten Bereich variabel. Sie beträgt, je nach verwendetem Initiator, etwa 0 bis 110 °C.

Die auf diese Weise hergestellten Polymerdispersionen weisen in der Regel Feststoffgehalte bis zu 75 Gew.-% auf. Von besonderer Bedeutung sind Polymerdispersionen mit Feststoffgehalten von 40 bis 70 Gew.-%. Für den Einsatz im erfindungsgemäßen Hydrierverfahren können die Dispersionen mit diesen Feststoffgehalten eingesetzt werden. Gegebenenfalls wird man die Dispersionen zuvor mit Wasser oder einer wässrigen Emulgatorlösung auf einen geeigneten Feststoffgehalt verdünnen. Bevorzugt liegt der Feststoffgehalt der im Verfahren eingesetzten Dispersion im Bereich von 10 bis 60 Gew.-%, insbesondere 20 bis 50 Gew.-%, bezogen auf das Gesamtgewicht der Dispersion.

Die in den Polymerdispersionen in der Regel noch enthaltenen oberflächenaktiven Substanzen sowie weitere Stoffe, die beispielsweise bei Emulsionspolymerisationen als übliche Polymerisationshilfsmittel verwendet werden, wirken sich im erfindungsgemäßen Hydrierverfahren nicht störend aus. Es empfiehlt sich jedoch die Polymerdispersionen vor der Hydrierung durch chemische oder physikalische Desodorierung von Lösungsmitteln und nicht polymerisierten Monomeren zu befreien.

Die nach dem erfindungsgemäßen Verfahren erhältlichen Dispersionen der von den Polymeren P abgeleiteten, hydrierten Polymere P' sind neu und ebenfalls Gegenstand der vorliegenden Erfindung. Die. in ihnen enthaltenen Polymere P', die sich in bekannter Weise aus den Dispersionen gewinnen lassen, zeichnen sich durch eine hohe, im Vergleich mit den Polymeren P der nicht-hydrierten Grunddispersionen deutlich verbesserte Stabilität gegenüber Umwelteinflüssen wie Licht, Sauerstoff und/oder erhöhter Temperatur aus. So zeigen die hydrierten Polymere P' eine niedrige Vergilbungsund Versprödungsneigung. Darüber hinaus zeichnen sich die hydrierten Polymere P' durch eine gegenüber den nicht-hydrierten Polymere P verbesserte Reißfähigkeit und eine erhöhte Reißdehnung aus. Dies prädestiniert die nach dem erfindungsgemäßen Verfahren erhältlichen Dispersionen der hydrierten Polymere P' für den Einsatz als Bindemittel für Dichtungs- oder Beschichtungsmassen, beispielsweise in Dispersionsfarben, in Kunststoffputzen, speziell für Außenanwendungen, als Ausrüstung für Textilien, Leder und Papier, als Haftkleber, als kautschukelastische Komponente in Formmassen, und zur Modifizierung von mineralischen Baustoffen, beispielsweise zur Modifizierung von Mörtel oder Zement bzw. Beton.

Eine spezielle Ausführungsform A1 der vorliegenden Erfindung betrifft hydrierte Polymerdispersionen, die sich von solchen Polymeren P ableiten, welche im Wesentlichen aufgebaut sind aus:
- 10 bis 90 Gew.-%, vorzugsweise 20 bis 70 Gew.-%, insbesondere 25 bis 65 gew.-% wenigstens einem Monomeren a, ausgewählt unter Butadien und Isopren, insbesondere Butadien als alleinigem Monomer a,
- 10 bis 90 Gew.-%, vorzugsweise 30 bis 80 Gew.-%, insbesondere 35 bis 75 Gew.-% wenigstens einem Monomeren b, ausgewählt unter vinylaromatischen Monomeren, Estern der Acrylsäure mit einem C₁-C₁₂-Alkanol, Estern der Methacrylsäure mit einem C₁-C₁₂-Alkanol, Acrylnitril und Methacrylnitril, insbesondere Styrol als alleinigem Monomer b,
- 0 bis 20 Gew.-%, vorzugsweise 0 bis 10 und insbesondere 0,1 bis 8 Gew.-% einem oder mehreren Monomeren c,
wobei die Anteile der Monomere a, b und c sich zu 100 Gew.-% addieren und der Anteil an Acrylnitril und Methacrylnitril weniger als 20 Gew.-% beträgt.

Hierunter sind besonders bevorzugt hydrierte wässrige Dispersionen von Polymeren, die ausgehend von Dispersionen erhältlich sind, deren Polymere P Butadien als Monomer a und Styrol als Monomer b enthalten. Bevorzugte Monomere c dieser Ausführungsform sind Acrylsäure, Methacrylsäure, Itaconsäure, Acrylamid, Methacrylamid, N-Methylolacrylamid und/oder N-Methylolmethacrylamid.

Polymerdispersionen, die Butadien und Styrol in einpolymerisierter Form enthalten, werden vorzugsweise durch radikalische Emulsionspolymerisation hergestellt und sind wichtige großtechnische Produkte. Sie sind in vieler Hinsicht Polymeren auf der Basis Styrol/Butylacrylat vergleichbar, wobei das einpolymerisierte Butadien die Rolle des "weichmachenden" Butylacrylats übernimmt. Zwar besitzt Butadien gegenüber Butylacrylat einen beträchtlichen Kostenvorteil, da ersteres direkt aus dem C₄-Schnitt des Steamcrackers abgetrennt werden kann, wohingegen letzteres in wenigstens zwei Schritten ausgehend von Steamcrackerprodukten hergestellt werden muss, jedoch weisen andererseits butadienhaltige Polymere die oben aufgeführten Nachteile hinsichtlich ihrer Witterungsbeständigkeit auf, so dass ihre Anwendungsmöglichkeiten bisher stark eingeschränkt waren.

Das erfindungsgemäße Hydrierverfahren führt bei den Polymeren P, beispielsweise bei den Polymeren der Ausführungsform A1, z. B. bei solchen auf der Basis von Butadien/Styrol, zu hydrierten Polymeren P', die hinsichtlich ihrer mechanischem Eigenschaften überraschenderweise den nicht hydrierten Polymeren wenigstens vergleichbar, wenn nicht gar überlegen sind und eine deutlich geringere Empfindlichkeit gegenüber Umweltbedingungen aufweisen. Dies prädestiniert die Dispersionen der hydrierten Polymere P' und speziell der Ausführungsform A1 für den Einsatz als Bindemittel für Dichtungs- oder Beschichtungsmassen, z.B. für wässrige Beschichtungsmittel wie Dispersionsfarben, in Kunststoffputzen, speziell für Außenanwendungen, als Ausrüstung für Textilien, Leder und Papier, als Haftkleber, als kautschukelastische Komponente in Formmassen, und zur Modifizierung von mineralischen Baustoffen, beispielsweise zur Modifizierung von Mörtel, Tonen, Zement oder Beton, z. B. Flüssigbeton.

Eine spezielle Anwendung finden die hydrierten Dispersionen der Polymere P als Bindemittel in wässrigen Beschichtungsmitteln wie Dispersionsfarben. Diese enthalten in der Regel eine nach diesem Verfahren erhältliches hydriertes Polymer, insbesondere eines der Ausführungsform A1, und hierunter bevorzugt eines auf der Basis von Styrol und Butadien in Form seiner wässrige Dispersion und wenigstens ein anorganisches Pigment und/oder einen organischen oder anorganischen Füllstoff sowie übliche Hilfsmittel. Derartige Beschichtungsmittel enthalten üblicherweise 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Füllstoff, Pigment, schwerflüchtigen Lösungsmitteln (Siedepunkt oberhalb 220 °C), z. B. Weichmacher, und polymere Hilfsmittel. Davon entfallen üblicherweise:
i 3 bis 90 Gew.-%, vorzugsweise 10 bis 60 Gew.-%, auf feste Bindemittelbestandteile (hydriertes Polymer P')
ii 5 bis 85 Gew.-%, vorzugsweise 10 bis 60 Gew.-%, auf wenigstens ein anorganisches Pigment,
iii 0 bis 85 Gew.-%, vorzugsweise 20 bis 70 Gew.-%, auf organische oder anorganische Füllstoffe und
iv 0,1 bis 40 Gew.-%, vorzugsweise 0,5 bis 15 Gew.-%, auf übliche Hilfsmittel.

Die Pigmentvolumenkonzentration PVK der erfindungsgemäßen Beschichtungsmittel liegt in der Regel oberhalb 10 %, z. B. 15 bis 85 %. Die Vorteile der erfindungsgemäßen hydrierten Polymere kommen insbesondere bei einer PVK ≥ 40 zum tragen, beispielsweise bei einer PVK im Bereich von 40 bis 80. Die PVK wird üblicherweise definiert als der mit 100 multiplizierte Quotient aus dem Gesamtvolumen der festen anorganischen Bestandteile (Pigment + Füllstoffe), geteilt durch das Gesamtvolumen der festen anorganischen Bestandteile und der Polymerisatteilchen der wässrigen Bindemittelpolymerisatdispersion; siehe Ullmann's Enzyklopädie der technischen Chemie, 4. Auflage, Band 15, S. 668.

Typische Pigmente ii für die erfindungsgemäßen Zubereitungen, insbesondere für Dispersionsfarben, sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat). Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Zubereitungen auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe iii umfassen grundsätzlich Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Zu den üblichen Hilfsmitteln iv zählen Netz- oder Dispergiermittel, wie Natrium, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze. Die Dispergiermittel werden in der Regel in einer Menge von 0.1 bis 0.6 Gew.-% bezogen auf das Gesamtgewicht der Dispersionsfarbe eingesetzt.

Ferner umfassen die Hilfsmittel iv gegebenenfalls auch Verdikkungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sog. Assoziativverdicker, beispielsweise Styrol-Maleinsäureanhydrid-Polymerisate oder hydrophob modifizierte Polyetherurethane, wie sie beispielsweise von N. Chen et al. in J. Coatings Techn. Vol 69, No. 867, 1997, S. 73 und von R. D. Hester et al. J. Coatings Technology, Vol. 69, No. 864, 1997, 109 beschrieben sind und auf deren Offenbarung hiermit in vollem Umfang Bezug genommen wird.

Auch anorganische Verdickungsmittel, z. B. Bentonite oder Hektorit, können verwendet werden. Verdickungsmittel werden im Allgemeinen in Mengen von 0,1 bis 3 Gew.-%, vorzugsweise 0,1 bis 1 Gew.-%, bezogen auf das Gesamtgewicht der wässrigen Zubereitung, verwendet. Ferner umfassen die Hilfsmittel iv in der Regel auch Entschäumer, Konservierungs- oder Hydrophobiermittel, Biozide, Fasern oder weitere Bestandteile.

Auch können die Beschichtungsmassen zur Einstellung der Filmbildeeigenschaften der Bindemittelpolymerisate, sog. Filmbildekonsolidierungsmittel (Weichmacher), z. B. Ethylenglykol, Propylenglykol, Butylenglykol, Hexylenglykol, Alkylether und -etherester von Glykolen und Polyglykolen, z. B. Diethylenglykolmonoethylether, Diethylenglykolmonoethyletheracetat, Diethylenglykolmonobutylether, Hexylenglykoldiacetat, Propylenglykolmonoethylether, -monophenylether, -monobutylether und -monopropylether, Dipropylenglykolmonomethylether, Dipropylenglykolmono-n-butylether, Tripropylenglykolmono-n-butylether, und die Acetate der vorgenannten Monoalkylether, z. B. Butoxybutylacetat, ferner Alkylester aliphatischer Mono- und Dicarbonsäuren, z. B. Texanol® der Eastman, oder technische Gemische von Dibutylestern der Bernsteinsäure, Glutarsäure und Adipinsäure enthalten. Filmbildehilfsmittel werden üblicherweise in Mengen von 0,1 bis 20 Gew.-%, bezogen auf das in der Zubereitung enthaltene Copolymer P, eingesetzt, so dass die Zubereitung eine Mindestfilmbildetemperatur < 15 °C und vorzugsweise im Bereich von 0 bis 10 °C aufweist.

Häufig unterscheidet man zwischen lösungsmittelhaltigen und lösungsmittelfreien Dispersionsfarben. Lösungsmittelhaltige Dispersionsfarben enthalten üblicherweise weniger als 15 Gew.-% Lösungsmittel und werden vorzugsweise für Anwendungen im Freien eingesetzt, wohingegen lösungsmittelfreie Farben bevorzugt im Innenbereich verwendet werden. Typische lösungsmittelhaltige Farben enthalten als Filmbildehilfsmittel neben den obengenannten Filmbildehilfsmittel Kohlenwasserstoffe bzw. deren Gemische, mit oder ohne aromatische Bestandteile, z. B. Testbenzine des Siedebereichs 140 bis 210 °C.

Ferner können die erfindungsgemäß zur Anwendung kommenden Zubereitungen auch vernetzende Zusätze enthalten. Derartige Zusätze können sein: aromatische Ketone, z. B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren sind z. B. aus der DE-A-38 27 975 und der EP-A-417 568 bekannt. Geeignete vernetzend wirkende Verbindungen sind auch wasserlösliche Verbindungen mit wenigstens zwei Aminogruppen, beispielsweise Dihydrazide aliphatischer Dicarbonsäuren gemäß der DE-A-39 01 073, wenn das Polymer P Carbonylgruppen enthaltende Monomere einpolymerisiert enthält.

Die erfindungsgemäßen Beschichtungsmittel sind stabile fluide Systeme, die man zur Beschichtung von einer Vielzahl von Substraten verwenden kann. Danach betrifft die vorliegende Erfindung auch ein Verfahren zum Beschichten von Substraten. Geeignete Substrate sind beispielsweise Holz, Beton, Metall, Glas, Keramiken, Plastik, Putze, Tapeten, gestrichene, grundierte oder verwitterte Untergründe. Das Aufbringen der Zubereitung auf das zu beschichtende Substrat erfolgt in einem von der Ausgestaltung der Zubereitung abhängigen Weise. Das Aufbringen kann, abhängig von Viskosität und Pigmentgehalt der Zubereitung sowie dem Substrat mittels Rollen, Bürsten, Rakeln oder als Spray erfolgen.

Die unter Verwendung der erfindungsgemäßen Beschichtungsmittel hergestellten Beschichtungen zeichnen sich durch eine im Vergleich zu nicht hydrierten Dispersionen der Polymere P hohe Witterungsstabilität, beispielsweise bei Einwirkung von ultravioletter Strahlung, aus.

Ein weiteres vorteilhaftes Einsatzgebiet der erfindungsgemäßen hydrierten Polymerdispersionen sind Dispersionssilikatfarben- und putze. Dispersionssilikatfarben und -putze enthalten neben der Polymerdispersion als weiteres Bindemittel Kaliwasserglas. Der Anteil der organischen Bindemittelkomponenten in Dispersionssilikatfarben kann bis zu 10 Gew.-% bezogen auf das Gesamtgewicht der Farbe betragen und wird vorzugsweise nach DIN 18363 etwa 5 Gew.-% nicht überschreiten. Der Aufbau einer Dispersionssilikatfarbe ist ähnlich dem einer Dispersionsfarbe. Dispersionssilikatfarben und -putze enthalten darüber hinaus als Hilfsmittel häufig Additive, die die Verträglichkeit von Dispersion und Wasserglas verbessern, sowie Hydrophobierungsmittel. Eine ausführliche Beschreibung der verschiedenen Komponenten und ihrer Wirkungen auf die Eigenschaften bietet die Monographie "Dispersions-Silikatsysteme: Grundlagen - Formulierungen - Problemlösungen", Wolfgang Schultze et al, Expert-Verlag, Renningen-Malmsheim, 1995, auf die hiermit in vollem Umfang Bezug genommen wird. Hierbei ist zu berücksichtigen, dass vorzugsweise alle Komponenten bei den durch das Wasserglas bedingten hohen pH-Werten stabil sein sollten. Im Unterschied zu den bekannten Bindemitteln auf der Basis von Styrol/Butylacrylat-Emulsionspolymerisaten erfüllen die erfindungsgemäßen hydrierten Polymere diese Anforderung in besonderem Maße.

Die erfindungsgemäßen Dispersionssilikatfarben sind ähnlich wie konventionelle Dispersionsfarben stabile fluide Systeme, die in den üblichen Weisen auf das zu beschichtende Substrat, beispielsweise Mauerwerk, Faserzementplatten, Betonwände, Fertigbetonformteile wie Fertigbetonwände, und vergleichbare Untergründe aufgebracht werden. Die so aufgebrachten Dispersionssilikatfarben auf Basis der hydrierten Polymere P' trocknen zu außergewöhnlich wasserfesten Beschichtungen. Diese besitzen im Vergleich zu Silikatdispersionsfarben auf Basis nicht hydrierter Butadien/Styrol-Copolymere eine erhöhte Resistenz gegen flüssiges Wasser, so dass auf Hydrophobierungsmittel verzichtet werden kann. Die für Silikatfarben typische hohe Durchlässigkeit für Wasserdampf wird jedoch nicht beeinträchtigt. Hervorzuheben ist ferner die gesteigerte Nassabriebfestigkeit der Beschichtungen, die vermutlich auf einer verbesserten Haftung und Bindung der Pigmente und Füllstoffe beruht.

Die im Folgenden aufgeführten Beispiele sollen die Erfindung verdeutlichen, ohne sie jedoch einzuschränken.

### Analytik

Die Glasübergangstemperatur wurde mittels DSC (Differential-Kalorimetrie), ausgewertet durch "mid-point-Methode" nach ASTM D 3418-823), bestimmt.

Die Mindestfilmbildetemperatur (MFT) der Polymerisatdispersionen bestimmte man in Anlehnung an Ullmanns Enzyklopädie der technischen Chemie, 4. Aufl. Bd. 19, VCH Weinheim 1980, S. 17. Als Messgerät diente eine sogenannte Filmbildebank (Metallplatte, an die ein Temperaturgradient angelegt wird und an die zur Temperaturkalibrierung an verschiedenen Stellen Temperatursensoren angebracht sind, wobei der Temperaturgradient so gewählt wird, dass das eine Ende der Filmbildebank eine Temperatur oberhalb der zu erwartenden MFT und das andere Ende eine Temperatur unterhalb der zu erwartenden MFT aufweist). Auf die Filmbildebank wird nunmehr die wässrige Polymerisatdispersion aufgebracht. In den Bereichen der Filmbildebank, deren Temperatur oberhalb der MFT liegt, bildet sich beim Trocknen ein klarer Film aus, wohingegen sich in den kühleren Bereichen Risse im Film auftreten und bei noch niedrigeren Temperaturen sich ein weißes Pulver bildet. Anhand des bekannten Temperaturprofils der Platte wird die MFT visuell bestimmt.

Der Hydrierumsatz wurde aus dem Verhältnis I/Iₒ normierter Intensitäten von IR-Banden hydrierter Proben (I) und nicht hydrierter Proben (Iₒ) ermittelt. Die IR-Bande bei 960 cm⁻¹ resultiert aus der Doppelbindung einer 1,4-verknüpften Butadieneinheit und die Bande bei 910 cm⁻¹ aus der Doppelbindung einer 1,2-verknüpften Butadieneinheit. Die Intensitäten wurden durch Integration der jeweiligen Bande und Vergleich der so ermittelten Peakfläche gegen die Peakfläche der Bande bei 699 cm⁻¹ (Styroleinheit) normiert.

Die Filme zur Bestimmung der Wasseraufnahme wurde wie folgt hergestellt: Eine abgewogene Menge der auf 25 % Festgehalt verdünnten Dispersionen wurde in Formen gegossen, so dass nach Trocknung 0,5 mm dicke Filme zurückblieben. Dispersionen mit einer MFT von unter 10 °C wurden bei 23 °C, 50 % rel. Feuchte verfilmt; bei höherer MFT wurde zunächst 2 d bei 50 °C getrocknet, dann 24 Stunden bei 23 °C, 50 % rel. Feuchte konditioniert. Aus den Filmen wurden Quadrate mit 5 cm Seitenlänge ausgestanzt, für 24 Stunden in Wasser gelegt und die Gewichtszunahme registriert.

### Beispiele

### I. Ausgangsdispersionen D1 bis D4

### Dispersion D1

In einem Polymerisationsgefäß wurden 3 800 g Wasser und eine geringe Menge Saatlatex (Polystyrolsaat, 30 nm) vorgelegt und auf 75 °C erwärmt. Hierzu gab man 6 g Natriumpersulfat sowie 5 Gew.-% der Monomeremulsion. Anschließend gab man zeitgleich beginnend unter Beibehaltung der Temperatur über separate Zuläufe 1 900 g einer 6 gew.-%igen wässrigen Natriumpersulfatlösung und die verbleibende Menge der Monomeremulsion innerhalb von 3,5 Stunden zu. Anschließend polymerisierte man eine weitere Stunde unter Beibehaltung der Temperatur. Danach reduzierte man den Gehalt an Restmonomeren unter 10 ppm durch kombinierte chemische und physikalische Desodorierung.

Die Monomeremulsion bestand aus
- 14 250 g: eines Monomerengemischs aus Butadien und Styrol im Gewichtsverhältnis 1:1,85
- 440 g: Acrylsäure
- 105 g: Texapon®NSO (Henkel KGaA)
- 9 300 g: Wasser
- 1,19 g: Ruthenium(III)tris-2,4-pentandionat

### Dispersion D2

Die Herstellung erfolgte wie bei D1 beschrieben mit dem Unterschied, dass die Monomeremulsion zusätzlich 60 g tert.-Dodecylmerkaptan enthielt.

### Dispersion D3

Die Herstellung erfolgte wie bei D1 beschrieben mit dem Unterschied, dass die Monomeremulsion zusätzlich 120 g tert.-Dodecylmerkaptan enthielt.

### Dispersion D4

Die Herstellung erfolgte wie bei D1 beschrieben, wobei ein Monomerengemisch aus Butadien und Styrol im Gewichtsverhältnis 1:1,3 eingesetzt wurde.

### II. Hydrierte Dispersionen HD1 bis HD8

### Hydrierte Dispersion HD1

Zu 950 g der wässrigen Polymerdispersion D1 wurden etwa 650 g destilliertes und entgastes Wasser zugegeben, um einen Feststoffgehalt von 30 % einzustellen. Dann wurden 0,07 g Tri-n-butylphosphin zugegeben. Diese Mischung wurde über 16 Stunden bei Raumtemperatur gerührt und anschließend in einen Autoklaven überführt, der zuvor mehrfach inertisiert wurde. Bei Raumtemperatur wurde zunächst ein Druck von 100 bar Wasserstoff aufgepresst. Es wurde auf 150 °C erwärmt; sobald die Temperatur erreicht war, wurde der Wasserstoffdruck auf 280 bar erhöht und über 15 Stunden konstant gehalten. Nach Ende der Reaktionszeit wurde der Autoklav abgekühlt, entspannt und entleert. Der Umsatz wurde IR-spektroskopisch bestimmt.

### Hydrierte Dispersion HD2

Die Umsetzung erfolgte wie bei HD1 beschrieben, jedoch wurde die Dispersion D1 mit destilliertem Wasser auf einen Feststoffgehalt von 40 % eingestellt.

### Hydrierte Dispersion HD3

Die Umsetzung erfolgte wie bei HD1 beschrieben, jedoch mit Dispersion D2.

### Hydrierte Dispersion HD4

Die Umsetzung erfolgte wie bei HD3 beschrieben, jedoch betrug die Reaktionszeit 30 Stunden.

### Hydrierte Dispersion HD5

Die Umsetzung erfolgte wie bei HD1 beschrieben, jedoch mit Dispersion D3.

### Hydrierte Dispersion HD6

Die Umsetzung erfolgte wie bei HD5 beschrieben, jedoch betrug die Reaktionszeit 30 Stunden.

### Hydrierte Dispersion HD7

Die Umsetzung erfolgte wie bei HD1 beschrieben, jedoch mit Dispersion D4.

### Hydrierte Dispersion HD8

Die Umsetzung erfolgte wie bei HD7 beschrieben, jedoch betrug die Reaktionszeit 30 Stunden.

| Dispersion | Ausgangsdispersion | Hydrierumsatz¹⁾ [%] | MFT [°C]²⁾ | Tg [°C]³⁾ | Wasseraufnahme [%] |
|---|---|---|---|---|---|
| D1 | -- | 0 | 28 | 28 | n.b. |
| D2 | -- | 0 | 28 | 27 | 2,1 |
| D3 | -- | 0 | 30 | 22 | 1,5 |
| HD1 | D1 | > 95 | 30 | 29 | 2,7 |
| HD2 | D1 | 95 | 24 | 29 | 1,9 |
| HD3 | D2 | 63 | 22 | 27 | 2,8 |
| HD4 | D2 | 90 | 25 | 26 | 2,5 |
| HD5 | D3 | 55 | 18 | 24 | 3,7 |
| HD6 | D3 | 69 | 20 | 23 | 3,5 |
| D4 | -- | 0 | 6 | 11 | 10,4 |
| HD7 | D4 | 86 | 6 | 11 | 18,9 |
| HD8 | D4 | > 95 | 1 | 13 | 4,7 |

| | | | | | |
|---|---|---|---|---|---|
| ¹⁾ bestimmt mittels IR-Spektrometrie | | | | | |
| ²⁾ Mindestfilmbildetemperatur | | | | | |
| ³⁾ Glasübergangstemperatur ⁴⁾ n.b.: nicht bestimmt | | | | | |

### III. Herstellung der wässrigen Beschichtungsmittel

### a) Fassadenfarben

Die Dispersionen D1 bis D4 und HD1 bis HD8 wurden nach der folgenden Rezeptur zu Fassadenfarben weiterverarbeitet (Vergleichsbeispiele V1 bis V4, Beispiele 1 bis 8)

Die Rezeptur umfasste folgende Bestandteile:
- 60,0 g: Wasser
- 1,1 g: Dispergiermittel¹⁾
- 11,6 g: 10 gew.-%-ige, wässrige Natriumpolyphosphat-Lösung²⁾
- 1,1 g: konz. wässrige Ammoniaklösung
- 3,1 g: handelsübliches Biozid³⁾
- 77,8 g: 4 gew.-%ige wässrige Verdickerlösung⁴⁾
- 39,0 g: Glimmer⁵⁾
- 130,8 g: Titandioxidpigment⁶⁾
- 25,0 g: Eisenoxidpigment (gelb)⁷⁾
- 155,8 g: Calcit⁸⁾
- 39,0 g: Talkum ⁹⁾
- 3,8 g: Entschäumer¹⁰⁾
- 6,6 g: Butyldiglykol
- 13,2 g: Testbenzin ¹¹⁾ und wahlweise:
- 389,0 g: 50 gew.-%Dispersion D1 bis D4 und
- 42,8 g: Wasser, oder
- 778,6 g: 25 gew.-%ige Dispersion HD1 bis HD8

¹⁾ 30 gew.-%ige wässrige Lösung eines Ammoniumpolyacrylats; Pigmentverteiler A der BASF AG, Ludwigshafen
²⁾ Calgon® N der BK Ladenburg, Ladenburg
³⁾ Konservierungsmittel KM 102 der Firma Schultze & Mayr GmbH, Norderstedt
⁴⁾ Tylose MH 4000 K (4 %ig) der Firma Clariant GmbH, Wiesbaden
⁵⁾ Micro-Mica der Firma Norwegian Talk AS Deutschland GmbH, Bad Soden
⁶⁾ Kronos®2056 der Kronos Titan GmbH, Leverkusen
⁷⁾ Bayterrox gelb 930 der Firma Bayer AG, Leverkusen
⁸⁾ Microdol 1 der Firma Norwegian Talk AS Deutschland GmbH, Bad Soden
⁹⁾ Talkum A.T.1 der Firma Norwegian Talk AS Deutschland GmbH, Bad Soden
¹⁰⁾ Nopco 8034 der Firma Henkel KGaA, Düsseldorf
¹¹⁾ Testbenzin K60 der Firma Brenntag, Frankfurt (Siedebereich 180 bis 210 °C)

Der Feststoffgehalt der Farben lag bei 59 Gew.-% für die mit 50 Gew.-%iger Dispersion hergestellten Farben und bei 44 Gew.-% für die mit 25 gew.-%iger Dispersion hergestellten Farben. Das Bindemittel/Pigment-Verhältnis ist für alle Farben identisch.

Die anwendungstechnischen Eigenschaften der Dispersionsfarben sind in der Tabelle 1 zusammengefasst.

### b) Dispersionssilikatfarben

Die Dispersionen D1, D3, Acronal 290 D sowie HD1 und HD6 wurden entsprechend dem nachfolgenden Rezept zu Dispersionssilikatfarben weiterverarbeitet (VS1, VS2, VS3 und S1, S2).
- 217 g: Wasser (bzw. 117 g bei HD1 und HD6)
- 2 g: Verdickungsmittel¹²⁾
- 2 g: Dispergiermittel¹³⁾
- 2 g: Stabilisierungsmittel¹⁴⁾
- 100 g: Titandioxidpigment¹⁵⁾
- 2 g: Entschäumer¹⁶⁾
- 100 g: 50 gew.-%ige Dispersion D1, D2, 290 D²²⁾ (bzw. 200 g 25 gew.-%ige HD1, HD6)
- 15 g: Testbenzin¹¹⁾
- 100 g: Calcit¹⁷⁾
- 40 g: Talkum¹⁸⁾
- 100 g: Plättchenfüllstoff 1¹⁹⁾
- 70 g: Plättchenfüllstoff 2²⁰⁾
- 250 g: stabilisiertes Kaliwasserglas, 29%ig²¹⁾

¹²⁾ Rhodopol 50 MD der Fa. Rhone Poulenc Chemie GmbH, Frankfurt
¹³⁾ Lopon 826 der BK Ladenburg GmbH, Ladenburg
¹⁴⁾ Betolin Quart der Fa. Woellner Werke, Ludwigshafen
¹⁵⁾ Kronos 2043 der Kronos Titan GmbH, Leverkusen
¹⁶⁾ Agitan 280 der Fa. Münzing, Heilbronn
¹⁷⁾ Omyacarb BLP 3 der Fa. Omya GmbH, Köln
¹⁸⁾ Talkum A.T.l der Firma Norwegian Talk AS Deutschland GmbH, Bad Soden
¹⁹⁾ Plastorit 0000 der Fa. Luzenac Deutschland GmbH, Düsseldorf
²⁰⁾ Plastorit 0 der Fa. Luzenac Deutschland GmbH, Düsseldorf
²¹⁾ Betolin P 35 der Fa. Woellner Werke, Ludwigshafen
²²⁾ Acronal 290 D der BASF Aktiengesellschaft, Ludwigshafen: wässrige Copolymerdispersion auf Basis von Styrol/Butylacrylat mit einer MFT von 20°C.

Der Feststoffgehalt der Farben lag bei 53 %.

Die anwendungstechnischen Eigenschaften der Dispersionssilikatfarben sind in Tabelle 2 zusammengefasst.

### IV. Bestimmung der anwendungstechnischen Eigenschaften

### 1. Witterungsbeständigkeit (Kreidung):

Zur Bestimmung der Witterungsbeständigkeit der Farbanstriche wurden je zwei Faserzementplatten (5 x 15 cm) zunächst mit einer Mischung der unter IIIa hergestellten Dispersionsfarben und Wasser im Gewichtsverhältnis 1:1 grundiert und anschließend mit den Dispersionsfarben aus III erneut gestrichen. Der Farbauftrag betrug 300 g/m² (Trockenauftrag). Je eine Platte wurde dann einer künstlichen Bewitterung ausgesetzt, die andere Platte diente als Referenz. Nach 100 Stunden wurde die Auskreidung gemäß DIN 53159 bestimmt.

**Tabelle 1:**

| Fassadenfarben | | |
|---|---|---|
| Beispiel | Dispersion | Kreidung DIN 53159 |
| V1 | D1 | 4 |
| 1 | HD1 | 1 |
| 2 | HD2 | 0 |
| V2 | D2 | 4 |
| 3 | HD3 | 2 |
| 4 | HD4 | 0 |
| V3 | D3 | 4 |
| 5 | HD5 | 2 |
| 6 | HD6 | 1 |
| V4 | D4 | 4 |
| 7 | HD7 | 1 |
| 8 | HD8 | 0-1 |

### 2. Scheuerfestigkeit (Nassabriebfestigkeit)

Die Dispersionssilikatfarben wurden in Anlehnung an DIN 53778 Blatt 2 auf ihre Scheuerfestigkeit geprüft: Mit Hilfe eines 60 mm breiten Rakels wurde ein Anstrichfilm auf eine Glasplatte aufgezogen. Die Spalthöhe wurde so gewählt, dass eine Trockenschichtdicke von 100 µm resultierte. Der Film wurde 28 Tage unter Normklimabedingungen getrocknet. Dann wurde in einem Scheuergerät unter ständigem Zutropfen einer 0,25%igen wässrigen Lösung von n-Dodecylbenzolsulfonat-Natriumsalz eine Scheuerbürste über den Anstrich geführt. Die Anzahl der Doppelhübe bis zum Durchscheuern des Anstrichs diente als Maß für die Scheuerfestigkeit bzw. Nassabriebfestigkeit.

### 3. Kapillare Wasseraufnahme

Die kapillare Wasseraufnahme von Dispersionsilikatfarben wurde in Anlehnung an DIN 52617 über die Gewichtszunahme in Wasser gelagerter, beschichteter Kalksandsteine geprüft. Dazu werden Kalksandsteine (nach DIN 106, Typ: KS NF, Rohdichte: 2,0 kg/dm³, 240 mm x 115 mm x 71 mm) auf einer der großen Flächen mit den Dispersionssilikatfarben beschichtet. Hierzu wurde zunächst eine Grundierung aus der 1:1 mit Wasser verdünnten Farbe aufgetragen. Dann wurde die Farbe zweimal unverdünnt aufgetragen, so dass insgesamt eine Auftragsmenge von 300 g/m² resultierte. Die Seitenflächen der Steine wurden mit einem Zwei-Komponenten-Lack versiegelt. Anschließend wurden die Steine 28 d bei 23 °C, 50 % rel. Feuchte getrocknet, dann je dreimal für 24 Stunden gewässert, 24 Stunden bei 50 °C getrocknet und abschließend 7 d bei 23 °C, 50 % rel. Feuchte konditioniert. Die Steine wurden zunächst gewogen, dann mit der beschichteten Seite nach unten 1 cm tief in Wasser gelagert. Nach 24 Stunden wurden die Steine herausgenommen und erneut gewogen. Die kapillare Wasseraufnahme errechnet sich aus der Gewichtsdifferenz dividiert durch die Prüffläche und die Wurzel aus der Zeit.

**Tabelle 2:**

| Dispersionssilikatfarben | | | |
|---|---|---|---|
| Beispiel | Dispersion | Scheuerfestigkeit/Doppelhübe | Kapillare Wasseraufnahme kg/m² x h^{0,5} |
| VS1 | D1 | 5700 | 1,78 |
| VS2 | D3 | > 6000 | 1,28 |
| S1 | HD1 | > 6000 | 0,78 |
| S2 | HD6 | > 6000 | 0,34 |
| VS3 | 290 D¹⁾ | 2100 | 2,15 |

| | | | |
|---|---|---|---|
| 1) Acronal 290 D der BASF Aktiengesellschaft, Ludwigshafen: wässrige Copolymerdispersion auf Basis von Styrol/Butylacrylat mit einer MFT von 20°C. | | | |

## Patentansprüche

1. Verfahren zur Hydrierung von ethylenisch ungesättigten Doppelbindungen in Polymeren P durch Umsetzung einer wässrigen Dispersion wenigstens eines Polymeren P mit Wasserstoff in Gegenwart wenigstens eines Hydrierkatalysators, der wenigstens ein Übergangsmetall, ausgewählt unter Rhodium und/oder Ruthenium, und wenigstens eine nichtionische, phosphorhaltige Verbindung, die eine koordinative Verbindung mit dem Übergangsmetall ausbilden kann, umfasst, **dadurch gekennzeichnet, dass** man den Hydrierkatalysator ohne Zusatz eines organischen Lösungsmittels in die wässrige Dispersion des Polymeren P einarbeitet.

2. Verfahren nach Anspruch 1, **dadurch gekennzeichnet, dass** man den Hydrierkatalysator erzeugt, indem man zu einer wässrigen Dispersion des Polymeren P, die das Übergangsmetall in Form eines Salzes oder einer Komplexverbindung enthält, wenigstens eine phosphorhaltige Verbindung gibt.

3. Verfahren nach Anspruch 1, **dadurch gekennzeichnet, dass** die wässrige Dispersion der Polymere P nicht mehr als 1000 ppm eines organischen Lösungsmittels enthält.

4. Verfahren nach einem der vorhergehenden Ansprüche, **dadurch gekennzeichnet, dass** die phosphorenthaltende Verbindung ausgewählt ist unter Verbindungen der allgemeinen Formel I
PR₃ (I)
und Verbindungen der Formel II
R₂P-(O)ₓ-A-(O)_{y}-PR₂ (II)
worin
R gleich oder verschieden sein können und unabhängig voneinander für C₁-C₁₀-Alkyl, C₄-C₁₂-Cycloalkyl, Aryl, C₁-C₁₀-Alkyloxy, C₄-C₁₂-Cycloalkyloxy und Aryloxy oder Fluor stehen, oder zwei Reste R gemeinsam C₃-C₆-Alkylen, C₃-C₆-Alkenylen oder C₃-C₆-Alkadienylen bedeuten,
A einen bivalenten Kohlenwasserstoffrest bedeutet, und
x,y unabhängig voneinander für 0 oder 1 stehen.

5. Verfahren nach einem der vorhergehenden Ansprüche, **dadurch gekennzeichnet, daß** die wässrige Dispersion der Polymere P durch radikalische, wässrige Emulsionspolymerisation ethylenisch ungesättigter Monomere M hergestellt wurde.

6. Verfahren nach Anspruch 5, **dadurch gekennzeichnet, daß** man das Übergangsmetall in Form einer Komplexverbindung oder eines Salzes in den zu polymerisierenden Monomeren M löst oder dispergiert.

7. Verfahren nach einem der vorhergehenden Ansprüche, **dadurch gekennzeichnet, dass** man 1 bis 1000 ppm Übergangsmetall, bezogen auf das Gesamtgewicht des Polymeren P in der Dispersion, einsetzt.

8. Verfahren nach einem der vorhergehenden Ansprüche, **dadurch gekennzeichnet, dass** man die Umsetzung bei Temperaturen im Bereich von 20 bis 250 °C und Wasserstoffpartialdrücken im Bereich von 0,5 bis 600 bar durchführt.

9. Verfahren nach einem der vorhergehenden Ansprüche, **dadurch gekennzeichnet, dass** man die Hydrierung bis zu einem Umsatz von wenigstens 50 mol-%, bezogen auf die im Polymer P enthaltenen ethylenisch ungesättigten Doppelbindungen, führt.

10. Verfahren nach einem der vorhergehenden Ansprüche, **dadurch gekennzeichnet, dass** die Polymere P im Wesentlichen aus wenigstens einem konjugiertem Dien als Monomer a und wenigstens einem mit dem Dien copolymerisierbaren, monoethylenisch ungesättigten Monomer b und gegebenenfalls einem oder mehreren modifizierenden Monomer c aufgebaut sind.

11. Wässrige Polymerdispersionen, erhältlich durch ein Verfahren gemäß einem der vorhergehenden Ansprüche, enthaltend wenigstens ein hydriertes Polymer P', das sich von einem Polymer P ableitet.

12. Wässrige Polymerdispersion nach Anspruch 11, wobei das Polymere P aufgebaut ist aus:
10 bis 90 Gew.-% wenigstens einem Monomeren a, ausgewählt unter Butadien und Isopren,
10 bis 90 Gew.-% wenigstens einem Monomeren b, ausgewählt unter vinylaromatischen Monomeren, Estern der Acrylsäure mit einem C₁-C₁₂-Alkanol, Estern der Methacrylsäure mit einem C₁-C₁₂-Alkanol, Acrylnitril und Methacrylnitril,
0 bis 20 Gew.-% einem oder mehreren Monomeren c
wobei die Anteile der Monomere a, b und c sich zu 100 Gew.-% addieren und der Anteil an Acrylnitril und Methacrylnitril weniger als 20 Gew.-% beträgt.

13. Wässriges Beschichtungsmittel, enthaltend wenigstens eine wässrige Polymerdispersion nach Anspruch 11 oder 12 und wenigstens ein anorganisches Pigment und/oder einen anorganischen Füllstoff sowie übliche Hilfsmittel.

14. Beschichtungsmittel nach Anspruch 13, dessen Pigmentvolumenkonzentration PVK wenigstens 40 beträgt.

15. Beschichtungsmittel nach Anspruch 13 oder 14 in Form einer Dispersionssilikatfarbe.

## Claims

1. A process for hydrogenating ethylenically unsaturated double bonds in polymers P by reacting an aqueous dispersion of at least one polymer P with hydrogen in the presence of at least one hydrogenation catalyst comprising at least one transition metal selected from rhodium and/or ruthenium and at least one nonionic phosphorus compound capable of forming a coordinative compound with the transition metal, which comprises incorporating the hydrogenation catalyst into the aqueous dispersion of the polymer P without adding an organic solvent.

2. A process as claimed in claim 1, wherein the hydrogenation catalyst is produced by adding at least one phosphorus compound to an aqueous dispersion of the polymer P containing the transition metal in the form of a salt or a complex compound.

3. A process as claimed in claim 1, wherein the aqueous dispersion of the polymers P contains not more than 1000 ppm of an organic solvent.

4. A process as claimed in any of the preceding claims, wherein the phosphorus compound is selected from compounds of the formula I
PR₃ (I)
and compounds of the formula II
R₂P-(O)ₓ-A-(O)_{y}-PR₂ (II)
where
R radicals can be identical or different and independently of one another are C₁-C₁₀-alkyl, C₄-C₁₂-cycloalkyl, aryl, C₁-C₁₀-alkyloxy, C₄-C₁₂-cycloalkyloxy and aryloxy or fluoro, or two radicals R together are C₃-C₆-alkylene, C₃-C₆-alkenylene or C₃-C₆-alkadienylene,
A is a bivalent hydrocarbon radical, and
x,y independently of one another are 0 or 1.

5. A process as claimed in any of the preceding claims, wherein the aqueous dispersion of the polymers P has been prepared by free-radical aqueous emulsion polymerization of ethylenically unsaturated monomers M.

6. A process as claimed in claim 5, wherein the transition metal in the form of a complex compound or a salt is dissolved or dispersed in the monomers M to be polymerized.

7. A process as claimed in any of the preceding claims, wherein from 1 to 1000 ppm of transition metal are used based on the overall weight of the polymer P in the dispersion.

8. A process as claimed in any of the preceding claims, wherein the reaction is conducted at temperatures in the range from 20 to 250°C and under hydrogen partial pressures in the range from 0.5 to 600 bar.

9. A process as claimed in any of the preceding claims, wherein the hydrogenation is carried out to a conversion of at least 50 mol%, based on the ethylenically unsaturated double bonds present in the polymer P.

10. A process as claimed in any of the preceding claims, wherein the polymers P are composed essentially of at least one conjugated diene as monomer a and at least one monoethylenically unsaturated monomer b which is copolymerizable with the diene, and, if desired, of one or more modifying monomers c.

11. An aqueous polymer dispersion obtainable by a process as claimed in any of the preceding claims, comprising at least one hydrogenated polymer P' derived from a polymer P.

12. An aqueous polymer dispersion as claimed in claim 11, wherein the polymer P is composed of:
from 10 to 90% by weight of at least one monomer a selected from butadiene and isoprene,
from 10 to 90% by weight of at least one monomer b selected from vinylaromatic monomers, esters of acrylic acid with a C₁-C₁₂-alkanol, esters of methacrylic acid with a C₁-C₁₂-alkanol, acrylonitrile and methacrylonitrile,
from 0 to 20% by weight of one or more monomers c,
the fractions of the monomers a, b and c adding up to 100% by weight and the fraction of acrylonitrile and methacrylonitrile being less than 20% by weight.

13. An aqueous coating composition comprising at least one aqueous polymer dispersion as claimed in claim 11 or 12 and at least one inorganic pigment and/or an inorganic filler and also customary auxiliaries.

14. A coating composition as claimed in claim 13 whose pigment volume concentration pvc is at least 40.

15. A coating composition as claimed in claim 13 or 14 in the form of a dispersion silicate paint.

## Revendications

1. Procédé d'hydrogénation de doubles liaisons éthyléniques dans des polymères P, au moyen d'une réaction entre une dispersion aqueuse d'au moins un polymère P et l'hydrogène, en présence d'au moins un catalyseur d'hydrogénation qui comprend au moins un métal de transition choisi parmi le rhodium et/ou le ruthénium, et au moins un composé non ionique, contenant du phosphore et étant apte à former une liaison de coordination avec le métal de transition, **caractérisé en ce que** l'on incorpore le catalyseur d'hydrogénation dans la dispersion aqueuse du polymère P sans ajouter un solvant organique.

2. Procédé selon la revendication 1, **caractérisé en ce que** l'on engendre le catalyseur d'hydrogénation en ajoutant au moins un composé contenant du phosphore, à une dispersion aqueuse du polymère P contenant le métal de transition sous forme d'un sel ou d'un complexe.

3. Procédé selon la revendication 1, **caractérisé en ce que** la dispersion aqueuse du polymère P contient un solvant organique à raison de 1 000 ppm au maximum.

4. Procédé selon l'une quelconque des revendications précédentes, **caractérisé en ce que** l'on choisit le composé contenant du phosphore, dans le groupe formé par des composés de formule générale I
PR₃ (I)
et des composés de formule II
R₂P-(O)ₓ-A-(O)_{y}-PR₂ (II)
formules dans lesquelles
R sont identiques ou différents et représentent, indépendamment les uns des autres, un groupe alkyle en C₁ à C₁₀, cycloalkyle en C₄ à C₁₂, aryle, alkyloxy en C₁ à C₁₀, cycloalkyloxy en C₄ à C₁₂ ou aryloxy, ou un atome de fluor, ou bien deux restes R représentent conjointement un groupe alkylène en C₃ à C₆, alcénylène en C₃ à C₆ ou alcadiénylène en C₃ à C₆,
A représente un reste hydrocarbure bivalent, et
x, y valent, indépendamment l'un de l'autre, 0 ou 1.

5. Procédé selon l'une quelconque des revendications précédentes, **caractérisé en ce que** l'on prépare la dispersion aqueuse du polymère P, au moyen d'une polymérisation en émulsion aqueuse par voie radicalaire, à partir de monomères M éthyléniquement insaturés.

6. Procédé selon la revendication 5, **caractérisé en ce que** l'on dissout ou disperse dans les monomères M destinés à la polymérisation, le métal de transition sous forme d'un complexe ou d'un sel.

7. Procédé selon l'une quelconque des revendications précédentes, **caractérisé en ce que** l'on met en oeuvre le métal de transition à raison de 1 ppm à 1 000 ppm, par rapport au poids total du polymère P dans la dispersion.

8. Procédé selon l'une quelconque des revendications précédentes, **caractérisé en ce que** l'on réalise la réaction à des températures comprises dans la gamme de 20°C à 250°C et à des pressions partielles d'hydrogène comprises dans la gamme de 0,5 bar à 600 bars.

9. Procédé selon l'une quelconque des revendications précédentes, **caractérisé en ce que** l'on poursuit l'hydrogénation jusqu'à obtenir un rendement d'au moins 50% en moles, par rapport aux doubles liaisons éthyléniquement insaturées présentes dans le polymère P.

10. Procédé selon l'une quelconque des revendications précédentes, **caractérisé en ce que** les polymères P sont constitués, pour l'essentiel, d'au moins un diène conjugué, en tant que monomère a, et d'au moins un monomère b monoéthyléniquement insaturé, capable d'être copolymérisé avec le diène, et éventuellement d'un ou de plusieurs monomères c modifiés.

11. Dispersion polymère aqueuse que l'on peut obtenir au moyen d'un procédé selon l'une quelconque des revendications précédentes, contenant au moins un polymère P' hydrogéné qui est dérivé du polymère P.

12. Dispersion polymère aqueuse selon la revendication 11, dans laquelle le polymère P est constitué de :
- au moins un monomère a, choisi parmi le butadiène et l'isoprène, à raison de 10% à 90% en poids,
- au moins un monomère b, choisi dans le groupe formé par les monomères vinylaromatiques, les esters de l'acide acrylique et d'un alcanol en C₁ à C₁₂, les esters de l'acide méthacrylique et d'un alcanol en C₁ à C₁₂, l'acrylonitrile et le méthacrylonitrile, à raison de 10% à 90% en poids,
- un ou plusieurs monomères c, à raison de 0% à 20% en poids,
la somme des proportions des monomères a, b et c valant 100% en poids, et la proportion d'acrylonitrile et de méthacrylonitrile étant inférieure à 20% en poids.

13. Agent de revêtement aqueux contenant au moins une dispersion polymère aqueuse selon la revendication 11 ou 12 et au moins un pigment inorganique, et/ou une charge inorganique, ainsi que des adjuvants classiques.

14. Agent de revêtement selon la revendication 13, présentant une concentration volumique de pigment PVK d'au moins 40.

15. Agent de revêtement selon la revendication 13 ou 14, sous forme d'une peinture à base de dispersion de silicates.
